# EUROPEAN PATENT SPECIFICATION

(11) **EP 0 644 206 B1**
(45) Date of publication and mention of the grant of the patent: **29.12.1997**
(21) Application number: 94114454.5
(22) Date of filing: 14.09.1994
(51) Int. Cl.: C08F 4/602, C08F 10/00

(54) **Olefin polymerization catalyst and process for preparing polyolefin**
Katalysator zur Polymerisation von Olefin und Verfahren zur Herstellung von Polyolefin
Catalyseur de polymérisation d'oléfines et procédé de préparation de polyoléfines

(30) Priority: 16.09.1993 JP 230457/93
(43) Date of publication of application: 22.03.1995
(73) Proprietor: SHOWA DENKO KABUSHIKI KAISHA, Minato-ku, Tokyo (JP)
(72) Inventor: Hiroyuki, Ohira, 2, Oaza Nakanosu, Oita-shi, Oita (JP); Kibino, Nobuyuki, 2, Oaza Nakanosu, Oita-shi, Oita (JP); Kimura, Makoto, 2, Oaza Nakanosu, Oita-shi, Oita (JP); Miyake, Shigenobu, 2, Oaza Nakanosu, Oita-shi, Oita (JP); Hori, Akihiro, 2, Oaza Nakanosu, Oita-shi, Oita (JP); Inazawa, Shintaro, 2, Oaza Nakanosu, Oita-shi, Oita (JP)
(74) Representative: Henkel, Feiler, Hänzel & Partner

(56) References cited:
- EP-A- 0 561 476
- DE-A- 1 947 588
- CHEMICAL ABSTRACTS, vol. 117, no. 2, 13 July 1992, Columbus, Ohio, US; abstract no. 8699q, N. TOMOTSU 'aluminoxane solutions and their use in polymerization catalysts for olefins' page 15 ; & JP-A-4 049 293 (IDEMITSU KOSAN)

## Description

### FIELD OF THE INVENTION

The present invention relates to an olefin polymerization catalyst and a process for preparing a polyolefin in the presence of the catalyst. More particularly, the present invention relates to an olefin polymerization catalyst, with which a polyolefin can be prepared at a high activity if the amount of an organoaluminum oxy-compound to be used is reduced, and the resulting polymers do not attach to a wall of a polymerization vessel, and it also relates to a process for preparing a polyolefin in the presence of the catalyst. The attachment of polymers to a wall of a polymerization vessel is sometimes referred to as fouling, hereinafter.

### BACKGROUND OF THE INVENTION

A process has been known for the preparation of a polyethylene and an ethylene-α-olefin copolymer in the presence of a metallocene compound and a methyl aluminoxane as catalysts. For example, JP-A-58-19309 (The term "JP-A" as used herein means an "unexamined published Japanese patent application") discloses a process for the preparation of ethylene and a copolymer of ethylene and an α-olefin having from 3 to 12 carbon atoms in the presence of bis(cyclopentadienyl)zirconium dichloride and a linear or cyclic methyl aluminoxane as catalysts. This preparation method provides a high activity per transition metal and a good copolymerizability but is disadvantageous from the industrial standpoint of view in that the use of a large amount of methyl aluminoxane, which is expensive, is required. Further, since these catalyst systems comprise a uniform system, the resulting polymer is provided in the form of fine powder that can be hardly handled and can easily cause fouling, making the industrial stable production of such a polymer difficult.

In order to solve these problems, for example, the following attempts have been made to improve aluminoxane:

JP-A-61-211307 discloses a process for the polymerization of an olefin in the presence of an aluminoxane which is a tetracontamer or higher polymer as calculated in terms of aluminum unit.

JP-A-61-130604, JP-A-60-245604, and JP-A-63-260903 disclose a preparation process using a halogen-containing aluminoxane.

JP-A-64-16803 discloses a preparation process using an aluminoxane partially crosslinked by water.

JP-A-1-240504 discloses a preparation process using a heat-treated aluminoxane.

JP-A-1-242607 discloses a preparation process using an aluminoxane obtained by the reaction of an organoaluminum compound, water, and an organic polyhydroxy compound.

JP-A-3-103407 discloses a preparation process using an aluminoxane comprising an organoaluminum compound having an n-alkyl group, an organoaluminum compound having a branched alkyl group, and water.

JP-A-2-22308 discloses a preparation process using an aluminoxane derived from tri-n-alkylaluminum and an aluminoxane derived from an organoaluminum compound having substituents other than an n-alkyl group at the same time.

U.S. Patents 5,091,352, and 5,171,799 disclose a preparation process using an aluminoxane sparingly soluble in benzene, which is obtained by bringing an organoaluminum compound into contact with water or a compound having active hydrogen.

JP-A-3-139503 discloses a preparation process using an aluminoxane, in which part of alkyl groups is substituted by hydrogen atoms.

However, the above-mentioned prior art catalyst systems provide an insufficient activity per aluminoxane as well as an insufficient effect of inhibiting fouling. In particular, slurry polymerization can be continuously effected for a prolonged period of time with these catalyst systems.

JP-A-4-049 293 discloses an aluminoxan solution comprising an aluminoxan, an aromatic hydrocarbon and a polar compound; as well as a polymerization catalyst comprising the aluminoxan solution described above and a transition metal compound.

EP-A-0 561 476 which has to be regarded as a prior art document under Article 54(3) and (4) EPC for the contracting states BE, DE, IT and NL, discloses polymethylaluminoxane compositions having increased solution stability in organic solvent and, in some cases, increased polymerization activity, which comprise moieties derived from an organic compound containing an electron-rich heteroatom (e.g., from Group V and/or Group VI of the Periodic Table) and a hydrocarbyl moiety. These compositions can be formed by reaction of trimethylaluminum, the organic compound, and water. They can also be formed by reaction of preformed polymethylaluminoxane and the organic compound, which can be a hydrocarbyl group-containing compound containing an electron-rich heteroatom (e.g., oxygen, nitrogen, or sulfur), either with or without an active hydrogen atom connected to the heteroatom. The organic compound, in some embodiments, has also been found to be effective in increasing the catalytic activity of modified polymethylaluminoxane which, in addition to methyl, contain C₂ and higher alkyl groups for enhanced solution stability.

### SUMMARY OF THE INVENTION

It is therefore an object of the present invention to provide an olefin polymerization catalyst with which a polyolefin can be prepared at a high activity even if the amount of an organoaluminum oxy-compound to be used is reduced, and the resulting polymers do not attach to a wall of a polymerization vessel.

It is another object of the present invention to provide a process for preparing a polyolefin in the presence of such an olefin polymerization catalyst.

These and other objects of the present invention will become more apparent from the following detailed description and examples.

The inventors have made extensive studies to solve the prior art problems. As a result, the inventors have found a novel olefin polymerization catalyst which can accomplish these objects and a novel process for preparing a polyolefin in the presence of such an olefin polymerization catalyst. Thus, the present invention has been accomplished.

The present invention relates to an olefin polymerization catalyst comprising:
(a) an addition product of (a1) an organoaluminum oxy-compound with (a2) an organic polar compound being at least one compound selected from the group consisting of a phosphorus-containing compound represented by the following formulae (4) to (5) described later and being free of active hydrogen; and
(b) a metallocene.

The present invention also relates to a process for the preparation of a polyolefin comprising the step of polymerizing or copolymerizing an olefin in the presence of the above-mentioned polymerization catalyst.

### DETAILED DESCRIPTION OF THE INVENTION

Examples of the organoaluminum oxy-compound (a1), which is used in the addition reaction with the organic polar compound (a2) being at least one compound selected from the group consisting of a phosphorus-containing compound represented by the formulae (4) to (5) mentioned below and being free of active hydrogen, include an aluminoxane.

Examples of the aluminoxane include an organoaluminum compounds represented by formula (8) or (9): 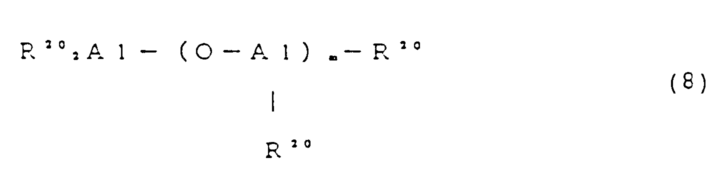 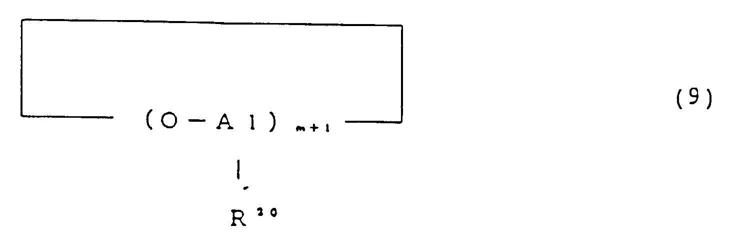 wherein R²⁰ represents a hydrocarbon group such as a methyl group, an ethyl group, a propyl group, a butyl group, and an isobutyl group, preferably a methyl group and an isobutyl group; and m represents an integer of from 1 to 100, preferably not less than 4, and more preferably not less than 8.

These aluminoxanes can be prepared by the known processes. Examples of such a preparation process include a process which comprises adding trialkylaluminum to a suspension of a salt having water of crystallization (e.g., copper sulfate hydrate, aluminum sulfate hydrate) in a hydrocarbon solvent and a process which comprises allowing solid, liquid or gaseous water to act on a trialkylaluminum in a hydrocarbon solvent.

Further examples of the aluminoxane include those represented by formula (10) or (11): 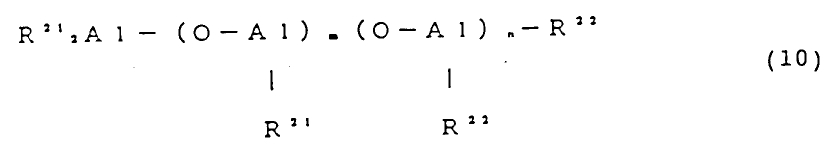 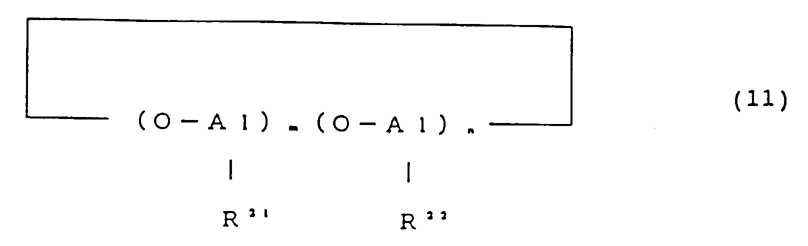 wherein R²¹ represents a hydrocarbon group such as a methyl group, an ethyl group, a propyl group, a butyl group, and an isobutyl group, preferably a methyl group and an isobutyl group; R²² is different from R²¹ and represents a hydrocarbon group such as a methyl group, an ethyl group, a propyl group, a butyl group, and an isobutyl group, a halogen atom such as chlorine and bromine, a hydrogen atom, or a hydroxyl group, the plurality of R²² may be the same or different; m represents an integer of from 1 to 100, preferably not less than 3; and the sum of m and n is from 2 to 100, preferably not less than 6.

In formula (10) or (11), the unit: 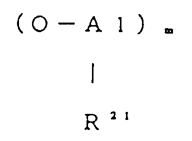 and the unit: 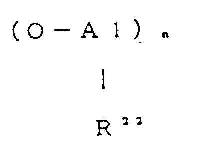 may be bonded in a block-form to each other or regularly or irregularly bonded in a random manner to each other. The process for the preparation of such an aluminoxane may be the similar to that of the aluminoxane represented by formulae (8) and (9), in which, instead of using one trialkylaluminum, two or more trialkylaluminums or one or more trialkylaluminums and one or more dialkylaluminum monohalides or dialkylaluminum monohydrides are used.

As the organoaluminum oxy-compound, an aluminoxane which has been heat-treated or treated with water may also be used.

Mixtures of two or more of the compounds represented by formulae (8), (9), (10) and (11) may be used as the organoaluminum oxy-compound.

The term "active hydrogen" as used herein means a hydrogen atom directly bonded to a phosphorus atom. Examples of compound containing active hydrogen include phosphines such as methylphosphine and dimethylphosphine. In the present invention, however, these compounds are undesirable.

The term "addition reaction" as used herein means a reaction by which atoms having a lone electron pair and a high electronegativity such as oxygen, phosphorus, nitrogen and sulfur are coordinated at vacant positions of an aluminum atom. For example, the reaction of a compound having active hydrogen such as alcohol and diol with an organoaluminum compound causes a substitution reaction with an alkyl group to produce the corresponding hydrocarbon. On the other hand, the addition reaction causes only coordination at vacant positions by using a lone electron pair but causes no production of hydrocarbon. The organic polar compound (a2) used in the present invention preferably causes only coordination in an aluminum atom but causes no production of hydrocarbon in the reaction with the organoaluminum oxy-compound (a1).

The organic polar compound (a2) will be further described hereinafter.

The organic compound containing a phosphorus atom (a2) include compounds represented by formulae (4) and (5):

R¹⁴R¹⁵R¹⁶P (4)

R¹⁴R¹⁵R¹⁶P=Z (5)

wherein R¹⁴ to R¹⁶ each represent an alkyl, alkoxy, alkylthio, aryl, aryloxy, arylthio, dialkylamino or acyl group each having from 1 to 20 carbon atoms, with the proviso that at least one of R¹⁴ to R¹⁶ is an alkoxy group, an alkylthio group, an aryloxy group, an arylthio group, a dialkylamino group, or an acyl group; and Z represents =O, =S, an alkylidene group or an imino group.

Preferably, the organic polar compound having a phosphorus atom (a2) a compound represented by formula (6) or (7):

(R¹⁷O)(R¹⁸O)(R¹⁹O)P (6)

(R¹⁷O)(R¹⁸O)(R¹⁹O)P=O (7)

wherein R¹⁷ to R¹⁹ each represent an alkyl or aryl group each having from 1 to 20 carbon atoms.

Groups represented by R¹⁴ to R¹⁶ and R¹⁷ to R¹⁹ in formulae (4) to (7) will be further described hereinafter. Examples of the alkyl group include a methyl group, an ethyl group, a propyl group, a butyl group, an isobutyl group, a t-butyl group, an amyl group, an isoamyl group, a hexyl group, a heptyl group, an octyl group, a nonyl group, a decyl group, a cetyl group, a cyclopentyl group, and a cyclohexyl group. Examples of the alkoxy group include a methoxy group, an ethoxy group, an n-propoxy group, an isopropoxy group, an n-butoxy group, an isobutoxy group, a t-butoxy group, a hexyloxy group, an octyloxy group, and a cyclohexyloxy group. Examples of the alkylthio group include a methylthio group, an ethylthio group, an n-propylthio group, an isopropylthio group, an n-butylthio group, an isobutylthio group, a t-butylthio group, a hexylthio group, an octylthio group, and a cyclohexylthio group. Examples of the aryl group include a phenyl group, a tolyl group, and a naphthyl group. Examples of the aryloxy group include a phenoxy group. Examples of the arylthio group include a phenylthio group. Examples of the dialkylamino group include a dimethylamino group, a diethylamino group, a dibutylamino group, a methylethylamino group, and a methylphenylamino group. Examples of the acyl group include an acetyl group, a propionyl group, a butyryl group, and a benzoyl group.

Groups represented by Z will be further described hereinafter. Examples of the alkylidene group include a methylene group, an ethylidene group, a propylidene group, a cyclopentadienylidene group, a cyclohexylidene group, and a benzylidene group. Examples of the imino group include a methylimino group, an ethylimino group, a butylimino group, a benzylimino group, and a phenylimino group.

Specific examples of the organic polar compounds represented by formulae (4) and (5) will be given below:

Trimethylphosphine oxide, triethylphosphine oxide, triphenylphosphine oxide, tributylphosphine oxide, triallylphosphine oxide, tricyclohexylphosphine oxide, dimethylethylphosphine oxide, dimethylphenylphosphine oxide, methylethylphenylphosphine oxide, diethylvinylphosphine oxide, diphenyl-p-tollylphosphine oxide, acetyldiphenylphosphine oxide, benzoyldiphenylphosphine oxide,

Trimethylphosphine sulfide, triethylphosphine sulfide, triphenylphosphine sulfide, tributylphosphine sulfide, triallylphosphine sulfide, tricyclohexylphosphine sulfide, dimethylethylphosphine sulfide, dimethylphenylphosphine sulfide, methylethylphenylphosphine sulfide, diethylvinylphosphine sulfide, diphenyl-p-tollylphosphine sulfide,

Methoxydimethylphosphine, ethoxydimethylphosphine, butoxydimethylphosphine, ethoxydiethylphosphine, ethoxydipropylphosphine, ethoxydibutylphosphine, methoxydiphenylphosphine, ethoxydiphenylphosphine, ethoxyethylbutylphosphine, ethoxymethylphenylphosphine, butoxyphenylvinylphosphine, phenoxydiphenylphosphine, phenoxydibenzylphosphine,

Trimethyl phosphate, triethyl phosphate, tripropyl phosphate, tributyl phosphate, tricyclohexyl phosphate, triallyl phosphate, triphenyl phosphate, tri-p-tollyl phosphate,

Trimethyl phosphite, triethyl phosphite, tripropyl phosphite, tributyl phosphite, tricyclohexyl phosphite, triallyl phosphite, triphenyl phosphite, tri-p-tollyl phosphite, tribenzyl phosphite,

Tris(dimethylamino)phosphine, tris(diethylamino)phosphine, tris(dipropylamino)phosphine, tris(dibutylamino)phosphine, phosphorus tripiperizide, phosphorus tri(N-methylanilide)phosphine,

Methyldimethyl phosphinate, methyldiethyl phosphinate, ethyldiethyl phosphinate, ethyldipropyl phosphinate, ethyldibutyl phosphinate, methyldicyclohexyl phosphinate, ethyldiphenyl phosphinate, O-methyldimethyl phosphinothioate, O-methyldiethyl phosphinothioate, O-ethyldiethyl phosphinothioate, O-methyldipropyl phosphinothioate, O-phenyldiethyl phosphinothioate, methyldiethyl phosphinodithioate, ethyldiethyl phosphinodithioate, methyldipropyl phosphinodithioate, phenyldiethyl phosphinodithioate,

Diethylmethyl phosphonite, diphenylmethyl phosphonite, dimethylethyl phosphonite, diethylethyl phosphonite, diphenylethyl phosphonite, diethylpropyl phosphonite, diethylbutyl phosphonite, diethylphenyl phosphonite, dimethylphenyl phosphonite, diethylbenzyl phosphonite,

Diethylmethyl phosphonate, diphenylmethyl phosphonate, dimethylethyl phosphonate, diethylethyl phosphonate, diphenylethyl phosphonate, diethylpropyl phosphonate, diethylbutyl phosphonate, diethylphenyl phosphonate, dimethylphenyl phosphonate, diethylbenzyl phosphonate, diethylcyclohexyl phosphonate, diethylvinyl phosphonate, ethylmethylmethyl phosphonate, diethylacetyl phosphonate, diethylbenzyl phosphonate,

O,O-dimethylmethyl phosphonothioate, O,O-diethylmethyl phosphonothioate, O,O-dipropylmethyl phosphonothioate, O,O-dibutylmethyl phosphonothioate, O,O-diethylethyl phosphonothioate, O,O-dibutylethyl phosphonothioate, O,O-diethylphenyl phosphonothioate, O,S-diethylmethyl phosphonothioate, O-ethyl-S-methylethyl phosphonothioate, O-ethyl-O-methylethyl phosphonothioate, O-ethyl-S-phenylethyl phosphonothioate, ethyl-N,N-diethyl-P-methylphosphonamidate, S-ethyl-N,N-diethyl-P-methylphosphonamidethioate, O-ethyl-N,N-diethyl-P-metilylphosphonamidethioate, O-ethyltriethylphosphonamidethioate, ethyl-N,N-diethyl-P-methylphosphonamidate,

N-ethyl-P,P,P-triphenylphosphinimide, N-phenyl-P,P,P-triphenylphosphinimide, and benzoyldiphenylphosphine.

The organic polar compound containing a phosphorus atom is preferably a compound represented by formula (4) or (5) wherein at least one of R¹⁴ to R¹⁶ is an alkoxy group or an aryloxy group, and more preferably a compound represented by formula (4) or (5) wherein R¹⁴ to R¹⁶ each represent either an alkoxy group or an aryloxy group. Even more preferably, the organic polar compound containing a phosphorus atom is a compound represented by formula (6) or (7), particularly formula (7). In formula (7), R¹⁷ to R¹⁹ each represent an alkyl or aryl group each having from 1 to 20 carbon atoms, preferably an alkyl group. The alkyl group is preferably a methyl, ethyl, propyl or butyl group, more preferably methyl or ethyl group.

Groups represented by R¹⁴ to R¹⁹ may contain atomic groups containing hetero atoms such as an oxygen atom, a nitrogen atom, a sulfur atom and a phosphorus atom which are not connected to the phosphorus atom. In this case, these atomic groups are preferably free of active hydrogen-containing group such as -OH and -NH₂. Specifically, a dialkylamino group, a carbonyl group, an alkoxy group, an aryloxy group, an isocyano group, a thiocarbonyl group, etc. are preferred.

In the addition reaction, two or more kinds of organic polar compounds containing at least two atoms selected from the group consisting of phosphorus atoms, nitrogen atoms, sulfur atoms, and oxygen atoms in addition to the organic polar compounds (a2) defined above may be used.

The feature of the addition reaction of the organoaluminum oxy-compound (a1) of the present invention with the organic polar compound (a2) free of active hydrogen and being at least one compound selected from the group consisting of a phosphorus-containing compound represented by the formulae (4) to (5) mentioned above will be described hereinafter with reference to the organic polar compound containing a phosphorus atom for example.

Firstly, the addition product (a) used in the present invention greatly differs in the solubility in various inert solvents from the organoaluminum oxy-compound (a1) to be used in the addition reaction. The solubility can be evaluated by the extraction determined by Soxhlet extraction with an inert hydrocarbon solvent such as hexane and toluene. Soxhlet extraction method will be further described hereinafter.

The air in a flask equipped with Soxhlet extractor is thoroughly replaced with nitrogen. The addition product from which the solvent has been distilled off is measured out as calculated in terms of aluminum atom. The addition product is then put in a cylindrical filter made of glass fibers in an atmosphere of nitrogen. The addition product is then extracted with a predetermined inert solvent for 8 hours. The extraction can be determined by measuring the aluminum concentration in the extract. The evaluation of the solubility by this method demonstrates that the addition product is difficultly soluble in various solvents unlike the aluminoxane used for the reaction as shown in the examples described hereinafter.

For the inhibition of fouling, the addition product is advantageously insoluble in the polymerization medium. Further, it is also effective for the prevention of problems during polymerization caused by migration or attachment of catalyst components to the wall of the reaction vessel. On the other hand, if the addition product exhibits a marked insolubility, it causes decrease in activity. The prevention of fouling, the inhibition of migration or attachment of catalyst components to the wall of the reaction vessel, and the enhancement of activity are restricted with respect to the preparation of the catalyst. It has been found that the foregoing evaluation method is effective for the evaluation of this restriction. Thus, the foregoing evaluation method is used as an index.

In the present invention, the preferred range of the extraction is that the hexane extraction (index of the prevention of fouling and the inhibition of migration or attachment of catalyst components) is preferably not more than 20%, more preferably not more than 15%; the toluene extraction (index of development of activity) is preferably not less than 15%; the heptane extraction is preferably not more than 25%, more preferably not more than 20%; and the benzene extraction is preferably more than 10% and not more than 30%.

Secondly, the addition product (a) is also characteristic in its composition. The determination of the organic polar compound containing a phosphorus atom contained in the addition product can be conducted by gas chromatography or induction coupling plasma emission analysis (ICP). ICP will be further described below.

The addition product is subjected to distillation so that the solvent is distilled off. The addition product thus dried is then measured out in a predetermined amount. The addition product thus measured out is thoroughly decomposed by an acidic aqueous solution such as aqueous solution of sulfuric acid, and then diluted by a predetermined factor to prepare a specimen. Phosphorus and aluminum are spectrometrically measured. The determination of the organic polar compound and aluminum is accomplished by the use of a calibration curve which has been previously prepared.

As shown in the examples described hereinafter, these measurements demonstrate that the organic polar compound containing a phosphorus atom used for the reaction is almost quantitatively reacted to produce an addition product having a composition according to the added amount of the organic polar compound.

Thirdly, the measurement of the infrared absorption spectrum of the addition product shows that the peak of spectrum of the organic polar compound containing a phosphorus atom is shifted. For example, if triethyl phosphate is used as an organic polar compound containing a phosphorus atom, the peak at 1,240 cm⁻¹ derived from P=O stretching vibration is shifted to a lower wave number, 1,180 cm⁻¹. This means that P=O is added to an aluminum atom.

The infrared absorption spectroscopy will be further described hereinafter. The addition product is subjected to distillation so that the solvent is distilled off. The addition product thus dried is then mixed with nujol which has been thoroughly heated and deaerated in an atmosphere of nitrogen. The specimen thus prepared is then clamped by KRS plates for measurement.

In the light of the foregoing three features, the following reaction mechanism can be thought. When an organic polar compound containing a phosphorus atom and an organoaluminum oxy-compound undergo addition reaction, the organic polar compound undergoes addition between linear or cyclic organoaluminum oxy-compound molecules to form a crosslinked structure, resulting in the change of the solubility of the addition product in various inert solvents.

As mentioned above, the addition product (a) used in the present invention is characteristic in its solubility in various inert solvents, composition and infrared absorption spectrum, and substantially differs from the aluminoxane which has heretofore been known.

The above mentioned features are not only of the organic polar compound containing a phosphorus atom but also common to the organic polar compound containing a nitrogen atom, a sulfur atom, or an oxygen atom used in the present invention.

An aluminoxane which exhibits a benzene solubility of not more than 10% at a temperature of 60°C is disclosed in U.S. Patent 5,091,352. However, the addition product of the present invention differs also from this aluminoxane. Firstly, as described in the examples described hereinafter, the extraction from Soxhlet extraction with benzene as a solvent is greater than that of the prior art by more than 10%. Secondly, as mentioned above, the addition product of the present invention differs in composition from the prior art. Thirdly, the addition product of the present invention differs from the prior art in the ratio of alkyl group to aluminum atom in the respective organoaluminum compound. The aluminoxane disclosed in U.S. Patent 5,091,352 has been insolubilized by the reaction with water or a compound having active hydrogen such as alcohol, diol and carboxylic acid. The reaction with the compound having active hydrogen proceeds in accordance with the following reaction scheme: 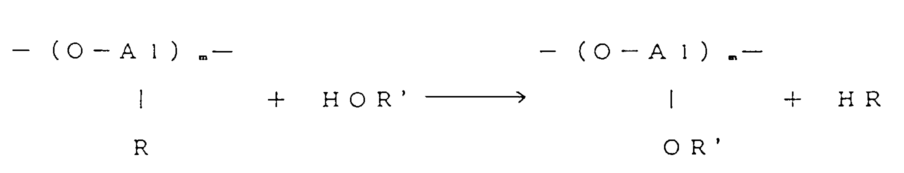 wherein R and R' each represents a hydrocarbon group such as an alkyl group. The reaction involves the production of hydrocarbons according to the kind of alkyl group in the aluminoxane. For example, if aluminum sulfate tetradecahydrate is used as in the method described in the examples of U.S. Patent 5,091,352, the reaction involves the production of methane gas. That is, when the reaction occurs, the alkyl groups in the aluminoxane were eliminated, resulting in the reduction of the ratio of alkyl group to aluminum atom as compared with that before the reaction. When the ratio of alkyl group to aluminum atom in the aluminoxane as starting material is 1.32, the ratio of alkyl group to aluminum atom in the benzene-insoluble aluminoxane is 0.57, as shown in Comparative Example 2 described hereinafter in accordance with the method described in the examples of U.S. Patent 5,091,352. In other words, methyl group is reacted by about 1/2. In the addition reaction of the present invention, on the other hand, the production of methane gas is not substantially observed as shown in the examples even if the same aluminoxane is used as starting material. After the reaction, the ratio of alkyl group to aluminum atom is 1.24. Thus, these two organoaluminum compounds differ from each other.

The determination of alkyl group in the organoaluminum compound can be conducted by the method as described in T.R. Crompton, Comprehensive Organometallic Analysis, page 6 (1987 by Plenum Press). Specifically, the organoaluminum compound is reacted with an alcohol having a relatively high boiling point such as normal butanol, isobutanol and 2-ethylhexanol. To the reaction system is then added an aqueous solution of sulfuric acid. The amount of the resulting gas is determined by means of a gas burette.

As mentioned above, the addition product (a) used in the present invention differs in solubility, composition and ratio of alkyl group to aluminum atom from the aluminoxane which has been heretofore known and is thus a novel organoaluminum compound.

The addition reaction of the organoaluminum oxy-compound (a1) with the organic polar compound (a2) free of active hydrogen may be effected in the polymerization system or before polymerization. In general, the addition reaction is preferably effected previously in an inert solvent. Examples of such an inert solvent employable in the present invention include aromatic hydrocarbons such as benzene, toluene and xylene, aliphatic hydrocarbons such as pentane, hexane, heptane, octane and decane, and alicyclic hydrocarbons such as cyclopentane and cyclohexane.

In the reaction with the organic polar compound (a2) free of active hydrogen, the organoaluminum oxy-compound (a1) may be used in the form of solution or solid or in the form supported on a carrier. Alternatively, the addition product of the organoaluminum oxy-compound and the organic polar compound free of active hydrogen may be supported on a carrier.

Examples of the carrier, on which the organoaluminum oxy-compound is to be supported, include a metallic oxide such as silica and alumina, a metallic chloride such as magnesium chloride, or an organic polymer such as polyethylene and polyproylene.

The amount of the organic polar compound (a2) free of active hydrogen to be used in the reaction with the organoaluminum oxy-compound (a1) is generally in the range of from 0.0001 to 0.5 mol, preferably 0.001 to 0.3 mol, more preferably from 0.005 to 0.2 mol, per equivalent of aluminum atom in the organoaluminum oxy-compound. Within this range, substantially the whole of the organic polar compound reacts with the organoaluminum oxy-compound to obtain the corresponding addition product, as shown in Table 1 described hereinafter.

The reaction of the organoaluminum oxy-compound with the organic polar compound free of active hydrogen is generally effected at a temperature of from -50°C to 200°C, preferably from 0°C to 150°C, more preferably from 50°C to 150°C. The reaction time is generally in the range of 0.05 to 200 hours, preferably 0.5 to 50 hours.

The addition product obtained by the reaction of the organoaluminum oxy-compound with the organic polar compound free of active hydrogen may be used as it is, and is preferably used after being washed with an inert hydrocarbon solvent such as aromatic hydrocarbons (e.g., benzene, toluene, xylene), aliphatic hydrocarbons (e.g., pentane, hexane, heptane, octane, decane) and alicyclic hydrocarbons (e.g., cyclopentane, cyclohexane). The washing temperature is generally in the range of -50°C to 200°C, preferably 0°C to 150°C, more preferably 50°C to 150°C.

Examples of the metallocene (b) include at least one metallocene of a metal of the Group 3, 4, 5 or 6 in the Periodical Table. Specific examples thereof include at least one selected from the group consisting of transition metal compounds represented by formulae (1), (2) and (3): 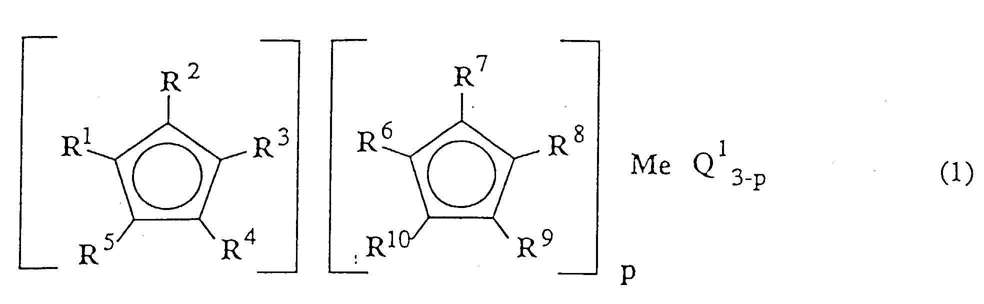 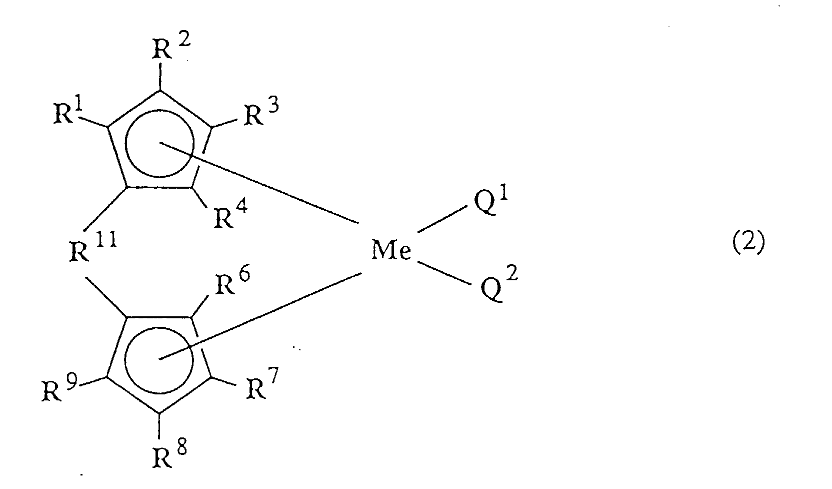 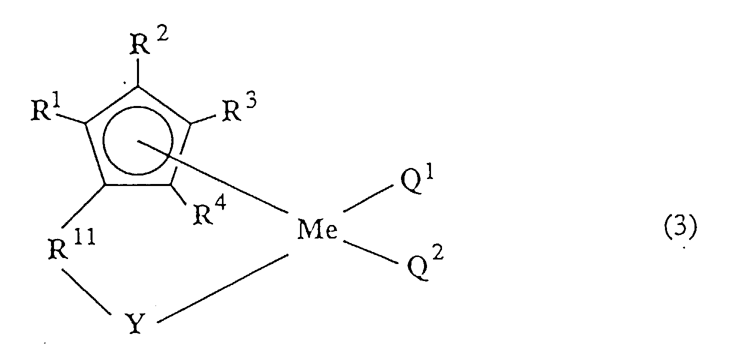 wherein R¹ to R¹⁰ may be the same or different and each represent a hydrogen atom, a hydrocarbon group (e.g., alkyl, alkenyl, aryl, alkylaryl, arylalkyl each having from 1 to 20 carbon atoms), an alkylsilyl group, an alkylgermyl group, or a 4- to 6-membered ring having a carbon-carbon bond; R¹¹ represents an alkylene, alkylgermylene, or alkylsilylene group each having from 1 to 20 carbon atoms; the plurality of Q may be the same or different and each represent a hydrocarbon group (e.g., aryl, alkyl, alkenyl, alkylaryl, or arylalkyl each having from 1 to 20 carbon atoms), an alkoxy group, an aryloxy group, a siloxy group, a hydrogen atom, or a halogen atom; Y represents -O-, -S-, -NR¹²-, -PR¹²-, or an electron donor ligand selected from the group consisting of -OR¹², -SR¹², -NR¹²R¹³, and -PR¹²R¹³, in which R¹² and R¹³ each represent a hydrogen atom, a hydrocarbon group (e.g., alkyl, alkenyl, aryl, alkylaryl and arylalkyl each having from 1 to 20 carbon atoms), a halogenated alkyl group or an aryl group; Me represents a transition metal of the Group 3, 4, 5 or 6 in the Periodical Table; and p represents an integer of 0 or 1.

In formulae (1) to (3), Me is a transition metal of the Group 3, 4, 5 or 6 in the Periodical Table (according to 1990's rule for inorganic chemical nomenclature), preferably the group 4, i.e., titanium, zirconium or hafnium, and particularly preferably zirconium or hafnium.

In formulae (1) to (3), R¹ to R¹⁰ may be the same or different and each represent a hydrogen atom, a hydrocarbon group (e.g., alkyl, alkenyl, aryl, alkylaryl, arylalkyl each having from 1 to 20 carbon atoms), an alkylsilyl group, an alkylgermyl group, or a 4- to 6-membered ring having carbon-carbon bond. Examples of the hydrocarbon group include a methyl group, an ethyl group, a propyl group, a butyl group, an isobutyl group, a t-butyl group, an amyl group, an isoamyl group, a hexyl group, a heptyl group, an octyl group, a nonyl group, a decyl group, a cetyl group, and a phenyl group. Examples of the alkylsilyl group include a trimethylsilyl group. Examples of the alkylgermyl group include a trimethylgermyl group.

Examples of a cyclopentadienyl ligand include an alkyl-substituted cyclopentadienyl group such as a cyclopentadienyl group, a methylcyclopentadienyl group, an ethylcyclopentadienyl group, an n-butylcyclopentadienyl group, a t-butylcyclopentadienyl group, a trimethylsilylcyclopentadienyl group, a dimethylcyclopentadienyl group and a pentamethylcyclopentadienyl group, as well as an indenyl group and fluorenyl group having or free of these substituents.

In formulae (1) to (3), R¹¹ represents an alkylene, alkylgermylene or alkylsilylene group each having from 1 to 20 carbon atoms. Examples of the alkylene group include a methylene group, an ethylene group, a propylene group, an isopropylidene group, a cyclopenthylidene group, a cyclohexylidene group, a tetrahydropyran-4-iridene group, and a diphenylmethylene group. Examples of the alkylsilylene group include a dimethylsilylene group and a diphenylsilylene group. Examples of the alkylgermylene group include a dimethylgermylene group and a diphenylgermylene group.

In formulae (1) to (3), the plurality of Q may be the same or different and each represent a hydrocarbon group (e.g., aryl, alkyl, alkenyl, alkylaryl, or arylalkyl each having from 1 to 20 carbon atoms), an alkoxy group, an aryloxy group, a siloxy group, a hydrogen atom, or halogen atom.

In formulae (1) to (3), Y represents -O-, -S-, -NR¹²-, -PR¹²-, or an electron donor ligand selected from the group consisting of -OR¹², -SR¹², -NR¹²R¹³ or -PR¹²R¹³, in which R¹² and R¹³ each represent a hydrogen atom, a hydrocarbon group (e.g., alkyl, alkenyl, aryl, alkylaryl, or arylalkyl each having from 1 to 20 carbon atoms), a halogenated alkyl group or an aryl group. Specific examples of such a hydrocarbon group include a methyl group, an ethyl group, a propyl group, a butyl group, an isobutyl group, a t-butyl group, an amyl group, an isoamyl group, a hexyl group, a heptyl group, an octyl group, a nonyl group, a decyl group, a cetyl group, a phenyl group, and a benzyl group. Preferred among these ligands are those shown by -NR¹²- and -PR¹²-.

Specific examples of the transition metal compound represented by formula (1), (2) or (3) wherein Me is zirconium will be given below.

Examples of the transition metal compound represented by formula (1) include bis(cyclopentadienyl)zirconium dichloride, bis(methylcyclopentadienyl)zirconium dichloride, bis(n-butylcyclopentadienyl)zirconium dichloride, bis(n-butylcyclopentadienyl)zirconium dimethyl, bis(1,3-dimethylcyclopentadienyl)zirconium dichloride, bis(pentamethylcyclopentadienyl)zirconium dichloride, (cyclopentadienyl)(methylcyclopentadienyl)zirconium dichloride, (cyclopentadienyl)(n-butylcyclopentadienyl)zirconium dichloride, (cyclopentadienyl)(indenyl)zirconium dichloride, (cyclopentadienyl)(fluorenyl)zirconium dichloride, cyclopentadienylzirconium trichloride, cyclopentadienylzirconium trimethyl, pentamethylcyclopentadienylzirconium trichloride, and pentamethylcyclopentadienylzirconium trimethyl.

Examples of the transition metal compound represented by formula (2) include
dimethylsilylenebis(methylcyclopentadienyl)zirconium dichloride,
isopropylidenebis(methylcyclopentadienyl)zirconium dichloride, ethylenebis(indenyl)zirconium dichloride, ethylenebis(4,5,6,7-tetrahydro-1-indenyl)zirconium dichloride,
isopropylidene(cyclopentadienyl)(fluorenyl)zirconium dichloride,
isopropylidene(cyclopentadienyl)(indenyl)zirconium dichloride,
isopropylidene(t-butylcyclopentadienyl)(t-butylindenyl)zirconium dichloride, and
isopropylidene(t-butylcyclopentadienyl)(t-butylindenyl)zirconium dimethyl.

Examples of the transition metal compound represented by formula (3) include
ethylene(t-butylamide)(tetramethylcyclopentadienyl)zirconium dichloride,
ethylene(methylamide)(tetramethylcyclopentadienyl)zirconium dichloride,
dimethylsilylene(t-butylamide)(tetramethylcyclopentadienyl)zirconium dichloride,
dimethylsilylene(t-butylamide)(tetramethylcyclopentadienyl)zirconium dibenzyl,
dimethylsilylene(benzylamide)(tetramethylcyclopentadienyl)zirconium dibenzyl, and
dimethylsilylene(phenylamide)(tetramethylcyclopentadienyl)zirconium dichloride.

Examples of the transition metal compound further include the foregoing transition metal compounds, where the zirconium is replaced by hafnium or titanium.

The foregoing transition metal compounds of the present invention may be used singly or in combination.

The addition product (a) of the organoaluminum oxy-compound (a1) with the organic polar compound (a2) free of active hydrogen and the metallocene (b) such as the transition metal compound may be previously brought into contact with each other in the presence or absence of a monomer or may be introduced into the polymerization system without being previously brought into contact with each other. In the case where the addition product of the organoaluminum oxy-compound with the organic polar compound free of active hydrogen and the metallocene are previously brought into contact with each other, the reaction may be generally effected in an inert solvent. Examples of the inert solvent include an aromatic hydrocarbons such as benzene, toluene and xylene, aliphatic hydrocarbons such as pentane, hexane, heptane, octane and decane, and alicyclic hydrocarbons such as cyclopentane and cylohexane.

The amount of the metallocene to be brought into contact with the addition product is generally in the range of from 1/5 to 1/10,000 mol, preferably from 1/10 to 1/2,000 mol, per equivalent of aluminum atom in the addition product.

The temperature at which the addition product and the metallocene are brought into contact with each other is generally between -50°C and 150°C, preferably between 0°C and 100°C.

Examples of the olefin to be subjected to polymerization according to the process for preparing a polyolefin of the present invention include olefins, cyclic olefins, and dienes (e.g., ethylene, propylene, 1-butene, 1-pentene, 1-hexene, 1-heptene, 1-octene, isooctene, 1-decene, 4-methyl-1-pentene, cyclopentene, cyclopentadiene, butadiene, 1,5-hexadiene, 1,4-hexadiene, 1,4-pentadiene). Such an olefin may be subjected to homopolymerization. Alternatively, two or more of these olefins may be mixed for copolymerization.

The polymerization catalyst according to the present invention may be used in preparation processes known in the art such as the solution polymerization method, the high-temperature melt polymerization method, the slurry polymerization method, and the gas-phase polymerization method. From the standpoint of production cost, the slurry polymerization method and the gas phase polymerization method are preferred. The molecular weight distribution and the compositional distribution of the resulting polyolefin can be controlled by using the multi-stage polymerization method. Further, olefin may be previously preliminary polymerized.

The amount of the polymerization catalyst of the present invention to be used is generally in the range of from 10⁻⁸ to 10⁻² mol/ℓ, preferably 10⁻⁷ to 10⁻³ mol/ℓ as calculated in terms of the concentration of the metallocene such as the transition metal compound in the polymerization reaction system.

The polymerization catalyst of the present invention may be used as it is upon polymerization but is preferably used in combination with an organoaluminum compound. The organoaluminum compound to be used in the polymerization is not specifically limited and may be selected from the group consisting of a trialkylaluminum such as trimethylaluminum, triethylaluminum, tripropylaluminum, triisopropylaluminum, tri-n-butylaluminum, triisobutylaluminum, tri-sec-butylaluminum, tri-tert-butylaluminum, tripentylaluminum, trihexylaluminum, trioctylaluminum and tricyclohexylaluminum; a dialkylaluminum halide such as dimethylaluminum chloride, diethylaluminum chloride and diisobutylaluminum chloride; a dialkylaluminum alkoxide such as dimethylaluminum methoxide and diethylaluminum ethoxide; a dialkylaluminum aryloxide such as diethylaluminum phenoxide; and aluminoxane. Preferred among these organoaluminum compounds is a trialkylaluminum, particularly trimethylaluminum, triethylaluminum, triisobutylaluminum or trioctylaluminum. The organoaluminum compound is generally used in such an amount that the atomic ratio of the transition metal in the metallocene to the organoaluminum compound (Me/Al) is in the range of 1/10 to 1/100,000, preferably 1/100 to 1/10,000.

The organoaluminum compound to be used in the polymerization may or may not be brought into contact with the addition product of the organoaluminum oxy-compound with the organic polar compound, the metallocene, or a contact product thereof shortly before polymerization.

The present invention will be further described in the following examples, but the present invention should not be construed as being limited thereto.

The analytical instruments used for the measurement of physical properties will be described below.

The melting point of the product was measured by means of a differential scanning calorimeter, Perkin Elmer (DSC-7), at a temperature rising rate of 10°C/min. MFR (melt flow rate) was measured at a temperature of 190°C under a load of 2.16 kg in accordance with JIS K-6760. HLMFR (high load melt flow rate) was measured under a load of 21.6 kg.

The solvent and the liquid organic polar compound used in the preparation of the catalyst had been dried by an ordinary method.

### REFERENCE EXAMPLE 1

### Extraction of aluminoxane:

Into a flask in which air had been thoroughly replaced with nitrogen was charged methyl aluminoxane MAO1 (available from Toso Akzo Co., Ltd.; 1.3 M (in terms of aluminum atom) toluene solution, methyl group/aluminum atom: 1.32). Toluene was then distilled off under reduced pressure so that the methyl aluminoxane was dried. Air in a flask equipped with Soxhlet extractor was thoroughly replaced with nitrogen. The methyl aluminoxane thus dried was measured out in an amount of 0.02 mol as calculated in terms of aluminum atom and then put in a cylindrical filter made of glass fibers in the Soxhlet extractor. 200 mℓ of hexane was then poured into the flask. The methyl aluminoxane was then extracted with hexane for 8 hours. The resulting extract was then measured for aluminum concentration. As a result, it was found that methyl aluminoxane had been extracted in an amount of 30.3% as calculated in terms of aluminum atom. Further, the extraction was effected with heptane, benzene and toluene, respectively. As a result, the percent extraction of methyl aluminoxane with these solvents were 32.6%, 41.8% and 48.5%, respectively.

### EXAMPLE 1

### Preparation of catalyst:

Into a 300-mℓ flask in which air had been thoroughly replaced with nitrogen were charged 50 mℓ of methyl aluminoxane (MAO1) and 50 mℓ of toluene. To the material was then added 290 mg (1.6 mmol) of triethyl phosphate. The reaction mixture was then heated to a temperature of 80°C with stirring for 4 hours. During this reaction process, no production of methane gas was observed. The resulting addition product was then extracted with hexane, heptane, benzene, and toluene, respectively. As a result, the percent extraction of methyl aluminoxane with these solvents were 11.9%, 13.1%, 14.6%, and 18.2%, respectively. The resulting addition product had an alkyl/aluminum atom ratio of 1.24. The results of ICP showed that the triethyl phosphate thus added had been almost quantitatively reacted to produce an addition product having an Al/P molar ratio of 39.

### Polymerization:

Into an autoclave made of SUS having an internal volume of 1.5 ℓ in which air had been thoroughly replaced with nitrogen were introduced 3.2 mℓ of a 0.5 mol/ℓ hexane solution of triisobutyl aluminum, 10 mg of the above addition product which had been washed with toluene, 800 mℓ of isobutane, and 1.5 mmol of hydrogen. Into the reaction mixture was then introduced a solution of 0.14 mg of bis(n-butylcyclopentadienyl)zirconium dichloride in 5 mℓ of toluene together with ethylene to initiate polymerization. The polymerization was effected at an ethylene pressure of 981 kPa (10 kg/cm²) and a temperature of 70°C for 30 minutes to obtain 27 g of a polymer. In this reaction process, there was observed no attachment of the polymer to the wall of the polymerization vessel. The specific activity per addition product was 5.23 g-polymer/g·hr·kPa (530 g-polymer/g·hr·atm) and the specific activity per complex was 375.1 g-polymer/g·hr·kPa (38,000 g-polymer/g·hr·atm). The polymer exhibited MFR of 0.7 g/10min. under a load of 2.16 kg. The ratio of MFR at 190°C under a load of 21.6 kg to that at 190°C under a load of 2.16 kg (HLMFR/MFR) was 16.5.

### EXAMPLES 2 TO 7

### Preparation of catalyst:

Catalysts were prepared in the same manner as in Example 1 except that organic polar compounds containing a phosphorus atom as shown in Table 1 were used in molar ratios shown in Table 1, respectively. In all these examples, there was observed no production of methane gas.

### Polymerization:

Polymerization was effected in the same manner as in Example 1. In all these examples, there was observed no attachment of polymer to the wall of the polymerization vessel. The results are shown in Table 2.

### REFERENCE EXAMPLE 2

### Extraction of aluminoxane:

As the methyl aluminoxane, MAO2 (available from Toso Akzo Co., Ltd.; 2.78 M (in terms of Al atom) toluene solution; methyl group/aluminum atom: 1.64) was used. It was extracted with solvents in the same manner as in Reference Example 1. The percent extraction with hexane, heptane, benzene and toluene were 58.0%, 63.3%, 95.6%, and 100%, respectively.

### EXAMPLE 8

### Preparation of catalyst:

A catalyst was prepared in the same manner as in Example 1 except that MAO2 in Reference Example 2 as the methyl aluminoxane was reacted under the conditions as in Table 1. In this reaction process also, there was observed no production of methane gas.

### Polymerization:

Polymerization was effected in the same manner as in Example 1 using the above polymerization catalyst. In this reaction process, there was observed no attachment of polymer to the wall of the polymerization vessel. The results are shown in Table 2.

### COMPARATIVE EXAMPLE 1

The preparation of a catalyst and polymerization were effected in the same manner as in Example 1 except that the MAO1 was used without using any organic polar compound containing a phosphorus atom. However, the attachment of the resulting polymer to the wall of the polymerization vessel began at the beginning of polymerization, making it impossible to allow a prolonged polymerization.

### COMPARATIVE EXAMPLE 2

### Preparation of catalyst:

A catalyst was prepared in the same manner as in Example 1 except that 2.4 g of aluminum sulfate tetradecahydrate was used without using any organic polar compound containing a phosphorus atom as described in Example 2 of U.S. Patent 5,091,352. In this reaction process, there was observed some production of methane gas. The solid aluminoxane had an alkyl group/aluminum atom ratio of 0.57.

### Polymerization:

18 g of a polymer was obtained in the same manner as in Example 1 using the above polymerization catalyst. The activity per addition product was 3.55 g-polymer/g·hr·kPa (360 g-polymer/g·hr·atm) and the specific activity per complex was 256.6 g-polymer/g·hr·kPa (26,000 g-polymer/g·hr·atm). The polymer exhibited MFR of 0.7 g/10 min. under a load of 2.16 kg. The ratio of MFR at 190°C under a load of 21.6 kg to that at 190°C under a load of 2.16 kg was 17.3.

### EXAMPLE 9

An operation was effected in the same manner as in Example 3 except that 0.20 mg of bis(n-butylcyclopentadienyl)zirconium dichloride was used in the polymerization. In this reaction process, there was observed no attachment of polymer to the wall of the polymerization vessel. The results are shown in Table 2.

### EXAMPLE 10

An operation was effected in the same manner as in Example 3 except that 0.70 mg of bis(n-butylcyclopentadienyl)zirconium dichloride was used in the polymerization. In this reaction process, there was observed no attachment of polymer to the wall of the polymerization vessel. The results are shown in Table 2.

### EXAMPLES 11 TO 14

Operations were effected in the same manner as in Example 3 except that bis(n-butylcyclopentadienyl)zirconium dichloride was replaced by complexes as shown in Table 3, respectively. In all these examples, there was observed no attachment of polymer to the wall of the polymerization vessel.

### EXAMPLE 15

An operation was effected in the same manner as in Example 3 except that 30 g of 1-hexene was introduced together with ethylene in the polymerization, to obtain 42 g of a polymer. In this reaction process, there was observed no attachment of polymer to the wall of the polymerization vessel. The specific activity per addition product was 8.29 g-polymer/g·hr·kPa (840 g-polymer/g·hr·atm) and the specific activity per complex was 592.3 g-polymer/g·hr·kPa (60,000 g-polymer/g·hr·atm). The polymer exhibited MFR of 2.1 g/10 min. under a load of 2.16 kg. The ratio of MFR at 190°C under a load of 21.6 kg to that at 190°C under a load of 2.16 kg was 17.2. The polymer exhibited a melting point of 112.8°C.

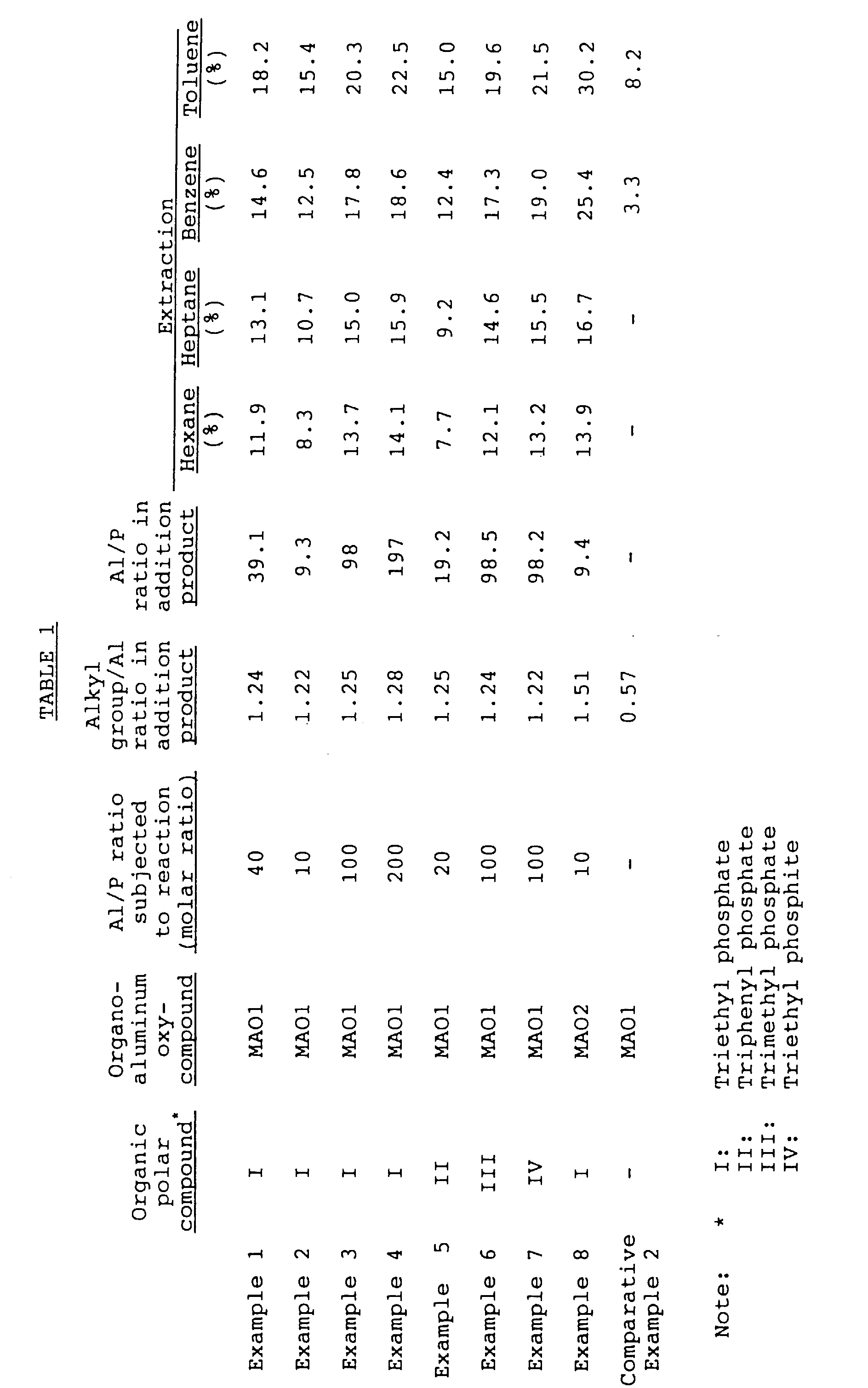

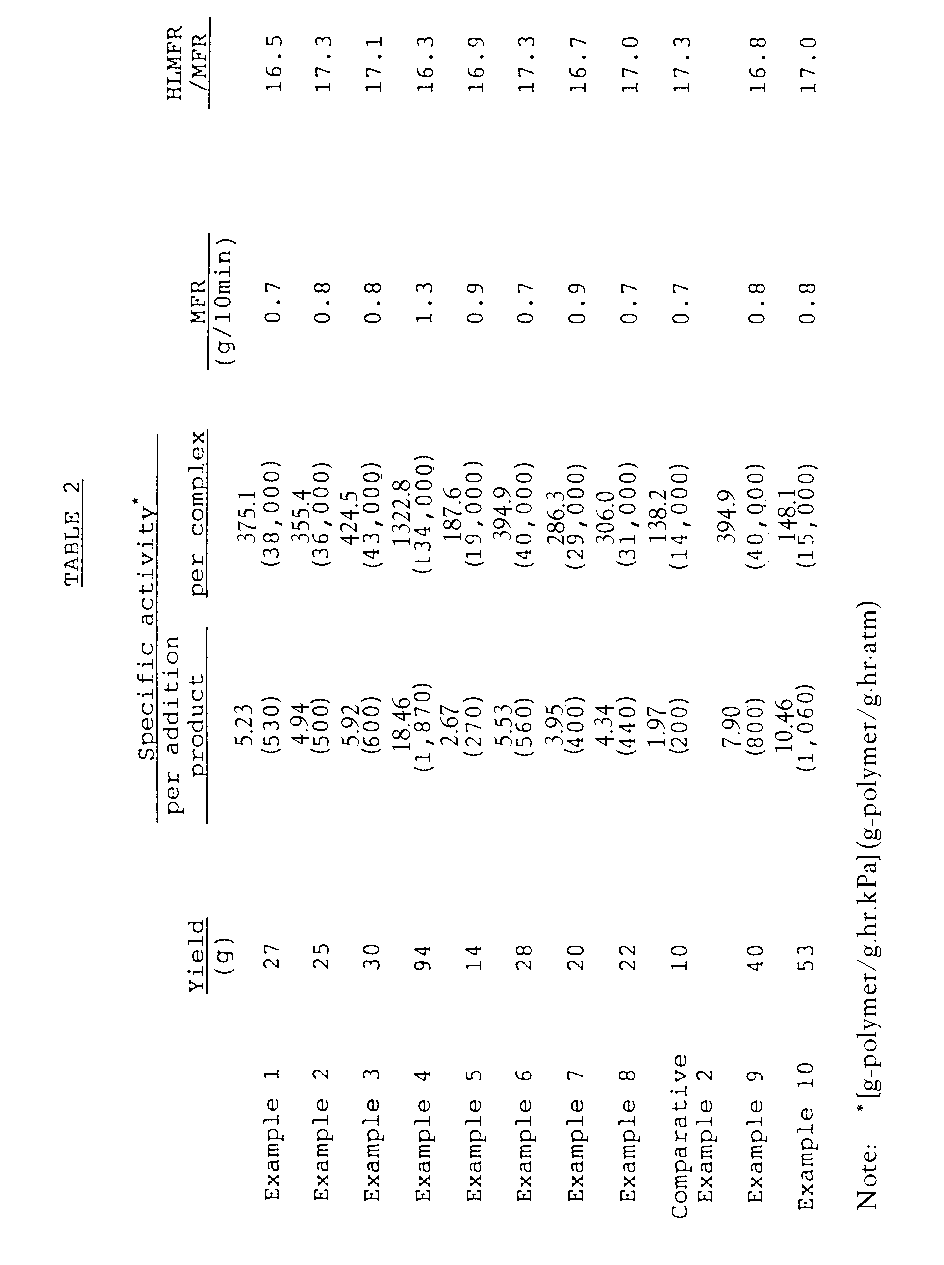

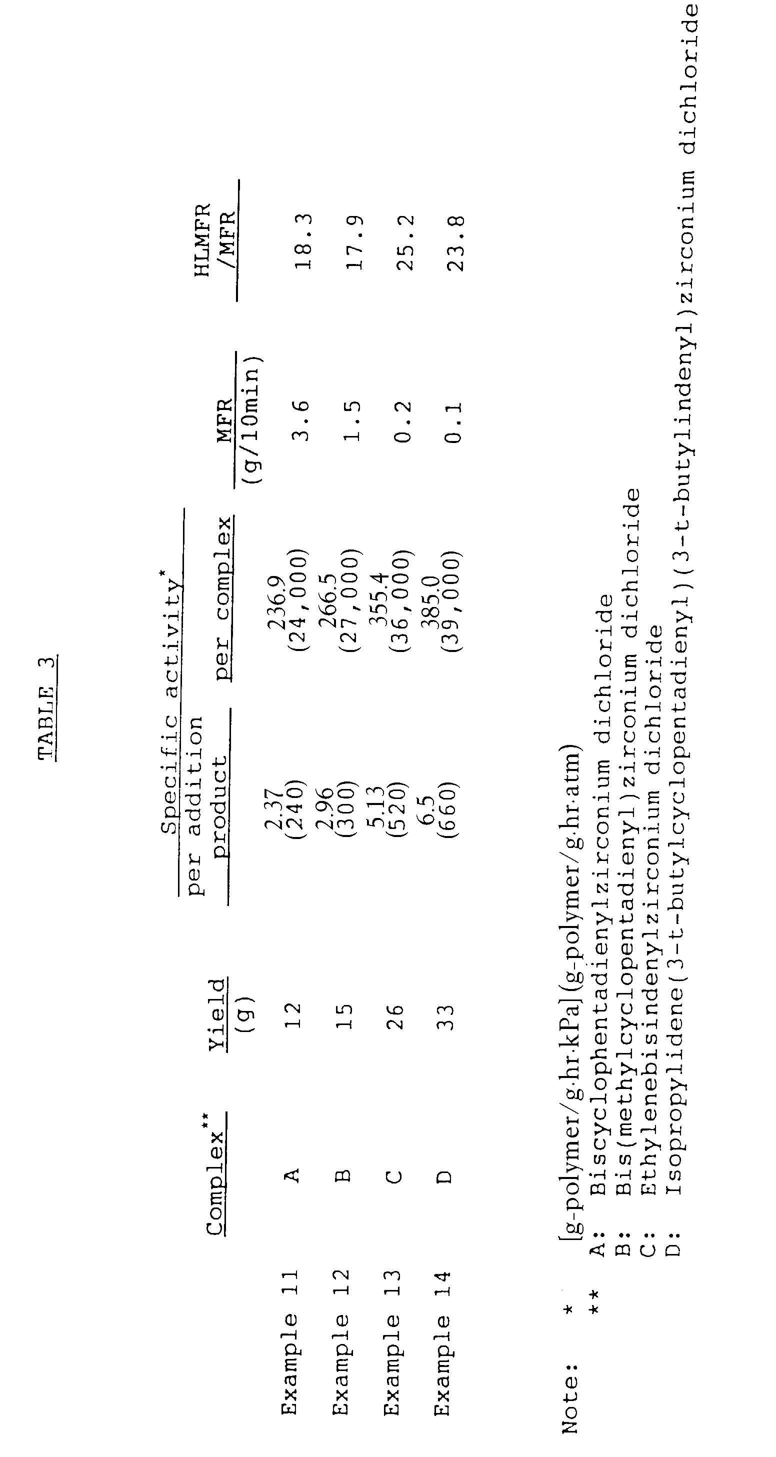

The present invention provides a novel olefin polymerization catalyst by using an addition product of an organoaluminum oxy-compound with an organic polar compound represented by the above mentioned formulae (4) and (5). It is understood from the comparison between Examples and Comparative Examples that the use of the organic polar compound according to the present invention greatly decreases fouling as compared with the case where such a compound is not used, and provides higher polymerization activity than the case where a compound containing active hydrogen, such as water, is used.

While the invention has been described in detail and with reference to specific embodiments thereof, it will be apparent to one skilled in the art that various changes and modifications can be made therein without departing from the spirit and scope thereof.

## Claims

1. An olefin polymerization catalyst comprising:
(a) an addition product of (a1) an organoaluminum oxy-compound with (a2) an organic polar compound being at least one compound selected from the group consisting of a phosphorus-containing compound represented by the following formulae (4) to (5) and being free of active hydrogen; and
(b) a metallocene:
R¹⁴R¹⁵R¹⁶P (4)
R¹⁴R¹⁵R¹⁶P=Z (5)
wherein R¹⁴ to R¹⁶ each represent an alkyl, alkoxy, alkylthio, aryl, aryloxy, arylthio, dialkylamino, or acyl group each having from 1 to 20 carbon atoms, with the proviso that at least one of R¹⁴ to R¹⁶ is an alkoxy group, an alkylthio group, an aryloxy group, an arylthio group, a dialkylamino group or an acyl group; and Z represents =O, =S, an alkylidene group, or an imino group.

2. An olefin polymerization catalyst as claimed in claim 1, wherein said organic polar compound (a2) is a compound represented by formula (6):
(R¹⁷O)(R¹⁸O)(R¹⁹O)P (6)
wherein R¹⁷ to R¹⁹ each represent an alkyl or an aryl group each having from 1 to 20 carbon atoms.

3. An olefin polymerization catalyst as claimed in claim 1, wherein said organic polar compound (a2) is a compound represented by formula (7):
(R¹⁷O)(R¹⁸O)(R¹⁹O)P=O (7)
wherein R¹⁷ to R¹⁹ each represent an alkyl or an aryl group each having from 1 to 20 carbon atoms.

4. An olefin polymerization catalyst as claimed in claim 1, wherein said metallocene is at least one metallocene of a metal of the Group 3, 4, 5 or 6 in the Periodical Table.

5. An olefin polymerization catalyst as claimed in claim 1, wherein said metallocene is at least one selected from the group consisting of transition metal compounds represented by formulae (1), (2) and (3): 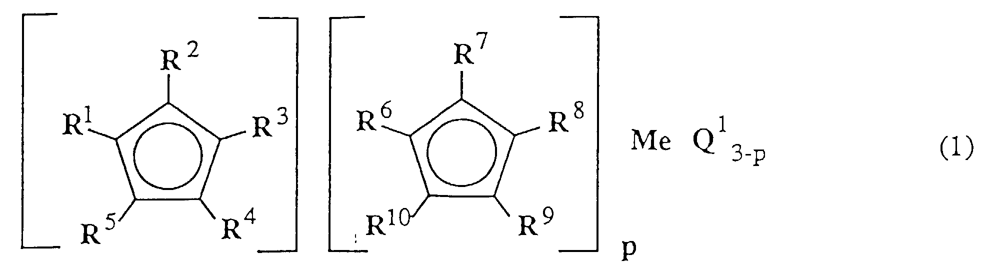 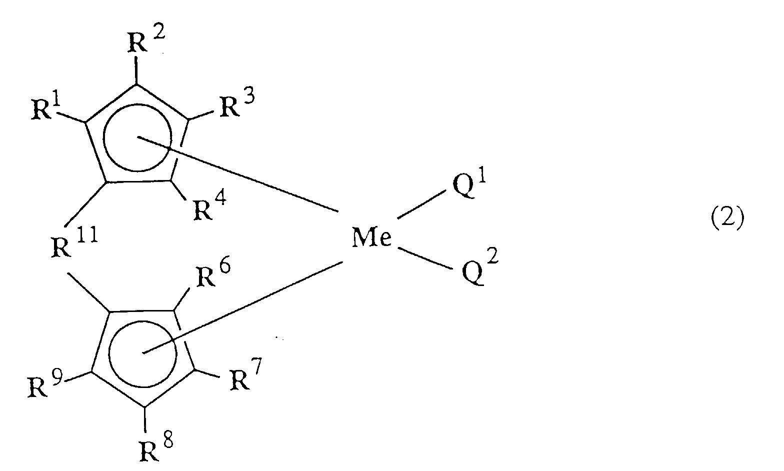 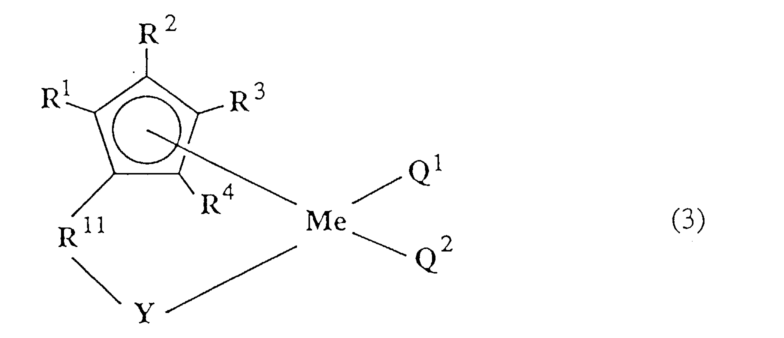 wherein R¹ to R¹⁰ may be the same or different and each represent a hydrogen atom, a hydrocarbon group, an alkylsilyl group, an alkylgermyl group, or a 4- to 6-membered ring having carbon-carbon bond; R¹¹ represents an alkylene, alkylgermylene or alkylsilylene group each having from 1 to 20 carbon atoms; the plurality of Q may be the same or different and each represent a hydrocarbon group, an alkoxy group, an aryloxy group, a siloxy group, a hydrogen atom, or a halogen atom; Y represents -O-, -S-, -NR¹²-, -PR¹²-, or an electron donor ligand selected from the group consisting of -OR¹², -SR¹², -NR¹²R¹³, and -PR¹²R¹³, in which R¹² and R¹³ each represent a hydrogen atom, a hydrocarbon group, a halogenated alkyl group, or an aryl group; Me represents a transition metal of the Group 3, 4, 5 or 6 in the Periodical Table; and p represents an integer 0 or 1.

6. An olefin polymerization catalyst as claimed in claim 1, wherein said addition product (a) has a hexane extraction of not more than 20%, a toluene extraction of not less than 15%, a heptan extraction of not more than 25%, and a benzene extraction of more than 10% and not more than 30%.

7. A process for preparing a polyolefin comprising the steps of polymerizing or copolymerizing an olefin in the presence of an olefin polymerization catalyst,
said olefin polymerization catalyst comprising:
(a) an addition product of (a1) an organoaluminum oxy-compound with (a2) an organic polar compound being at least one compound selected from the group consisting of a phosphorus-containing compound represented by the following formulae (4) to (5) and being free of active hydrogen; and
(b) a metallocene:
R¹⁴R¹⁵R¹⁶P (4)
R¹⁴R¹⁵R¹⁶P=Z (5)
wherein R¹⁴ to R¹⁶ each represent an alkyl, alkoxy, alkylthio, aryl, aryloxy, arylthio, dialkylamino, or acyl group each having from 1 to 20 carbon atoms, with the proviso that at least one of R¹⁴ to R¹⁶ is an alkoxy group, an alkylthio group, an aryloxy group, an arylthio group, a dialkylamino group or an acyl group; and Z represents =O, =S, an alkylidene group, or an imino group.

8. A process as claimed in claim 7, wherein said organic polar compound (a2) is a compound represented by formula (6):
(R¹⁷O)(R¹⁸O)(R¹⁹O)P (6)
wherein R¹⁷ to R¹⁹ each represent an alkyl or an aryl group each having from 1 to 20 carbon atoms.

9. A process as claimed in claim 7, wherein said organic polar compound (a2) is a compound represented by formula (7):
(R¹⁷O)(R¹⁸O)(R¹⁹O)P=O (7)
wherein R¹⁷ to R¹⁹ each represent an alkyl or an aryl group each having from 1 to 20 carbon atoms.

## Patentansprüche

1. Olefin-Polymerisationskatalysator, umfassend
(a) ein Additionsprodukt aus (a1) einer organischen Aluminiumoxyverbindung mit (a2) einer organischen polaren Verbindung, bei der es sich um mindestens eine phosphorhaltige Verbindung der folgenden Formeln (4) oder (5) ohne aktiven Wasserstoff handelt, und
(b) ein Metallocen:
R¹⁴R¹⁵R¹⁶P (4)
R¹⁴R¹⁵R¹⁶P=Z (5)
worin bedeuten:
R¹⁴ bis R¹⁶ jeweils eine Alkyl-, Alkoxy-, Alkylthio-, Aryl-, Aryloxy-, Arylthio-, Dialkylamino- oder Acylgruppe mit jeweils 1 bis 20 Kohlenstoffatom(en), wobei gilt, daß mindestens einer der Reste R¹⁴ bis R¹⁶ für eine Alkoxygruppe, eine Alkylthiogruppe, eine Aryloxygruppe, eine Arylthiogruppe, eine Dialkylaminogruppe oder eine Acylgruppe steht, und
Z =O, =S, eine Alkylidengruppe oder eine Iminogruppe.

2. Olefin-Polymerisationskatalysator nach Anspruch 1, wobei es sich bei der organischen polaren Verbindung (a2) um eine Verbindung der Formel (6)
(R¹⁷O)(R¹⁸O)(R¹⁹O)P (6)
worin R¹⁷ bis R¹⁹ jeweils für eine Alkyl- oder Arylgruppe jeweils mit 1 bis 20 Kohlenstoffatom(en) stehen, handelt.

3. Olefin-Polymerisationskatalysator nach Anspruch 1, wobei es sich bei der organischen polaren Verbindung (a2) um eine Verbindung der Formel (7)
(R¹⁷O)(R¹⁸O)(R¹⁹O)P=O (7)
worin R¹⁷ bis R¹⁹ jeweils für eine Alkyl- oder Arylgruppe mit jeweils 1 bis 20 Kohlenstoffatom(en) stehen, handelt.

4. Olefin-Polymerisationskatalysator nach Anspruch 1, wobei es sich bei dem Metallocen um mindestens ein Metallocen eines Metalls der Gruppen 3, 4, 5 oder 6 des Periodensystems handelt.

5. Olefin-Polymerisationskatalysator nach Anspruch 1, wobei es sich bei dem Metallocen um mindestens ein solches aus der Gruppe Übergangsmetallverbindungen der Formeln (1), (2) und (3) 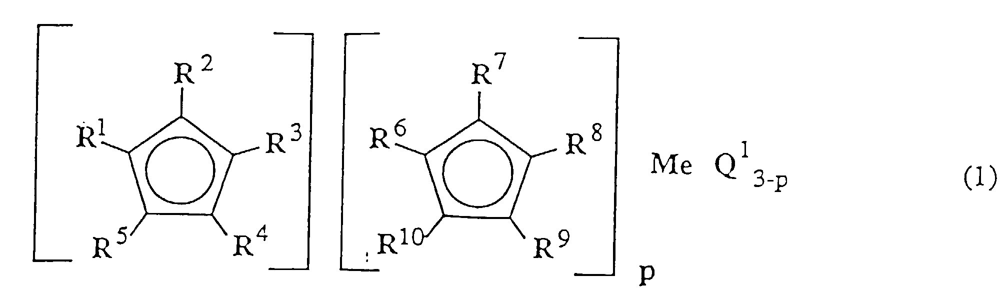 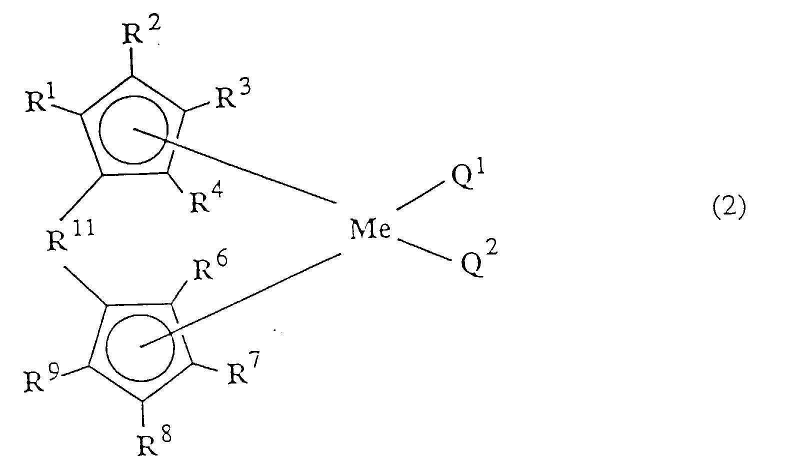 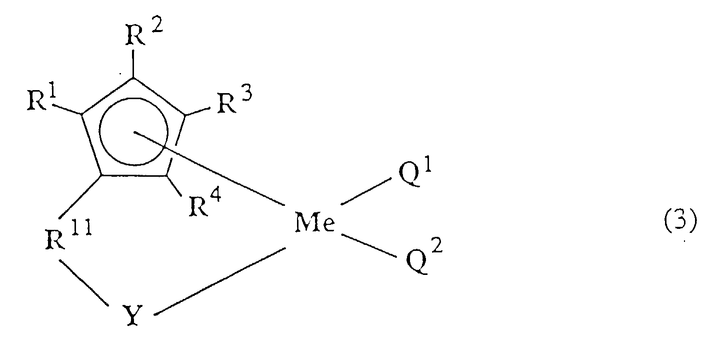 worin bedeuten:
R¹ bis R¹⁰, die gleich oder verschieden sein können, jeweils ein Wasserstoffatom, eine Kohlenwasserstoffgruppe, eine Alkylsilylgruppe, eine Alkylgermylgruppe oder einen 4- bis 6-gliedrigen Ring mit Kohlenstoff-Kohlenstoff-Bindung;
R¹¹ eine Alkylen-, Alkylgermylen- oder Alkylsilylengruppe mit jeweils 1 bis 20 Kohlenstoffatom(en); die (verschiedenen) Reste Q, die gleich oder verschieden sein können, jeweils eine Kohlenwasserstoffgruppe, eine Alkoxygruppe, eine Aryloxygruppe, eine Siloxygruppe, ein Wasserstoffatom oder ein Halogenatom;
Y -O-, -S-, -NR¹²-, -PR¹²- oder einen Elektronendonatorliganden, ausgewählt aus der Gruppe -OR¹², -SR¹², -NR¹²R¹³ und -PR¹²R¹³ mit R¹² und R¹³ jeweils gleich einem Wasserstoffatom, einer Kohlenwasserstoffgruppe, einer halogenierten Alkylgruppe oder einer Arylgruppe; Me ein Übergangsmetall der Gruppen 3, 4, 5 oder 6 des Periodensystems und p eine ganze Zahl, nämlich 0 oder 1 handelt.

6. Olefin-Polymerisationskatalysator nach Anspruch 1, wobei aus dem Additionsprodukt (a) mittels Hexan nicht mehr als 20%, mittels Toluol nicht weniger als 15%, mittels Heptan nicht mehr als 25% und mittels Benzol mehr als 10% und nicht mehr als 30% extrahiert werden.

7. Verfahren zur Herstellung eines Polyolefins durch Polymerisieren oder Copolymerisieren in Gegenwart eines Olefin-Polymerisationskatalysators, wobei der Olefin-Polymerisationskatalysator
(a) ein Additionsprodukt aus (a1) einer organischen Aluminiumoxyverbindung mit (a2) einer organischen polaren Verbindung, bei der es sich um mindestens eine phosphorhaltige Verbindung der folgenden Formeln (4) oder (5) ohne aktiven Wasserstoff handelt, und
(b) ein Metallocen:
R¹⁴R¹⁵R¹⁶P (4)
R¹⁴R¹⁵R¹⁶P=Z (5)
worin bedeuten:
R¹⁴ bis R¹⁶ jeweils eine Alkyl-, Alkoxy-, Alkylthio-, Aryl-, Aryloxy-, Arylthio-, Dialkylamino- oder Acylgruppe mit jeweils 1 bis 20 Kohlenstoffatom(en), wobei gilt, daß mindestens einer der Reste R¹⁴ bis R¹⁶ für eine Alkoxygruppe, eine Alkylthiogruppe, eine Aryloxygruppe, eine Arylthiogruppe, eine Dialkylaminogruppe oder eine Acylgruppe steht, und
Z =O, =S, eine Alkylidengruppe oder eine Iminogruppe
umfaßt.

8. Verfahren nach Anspruch 7, wobei es sich bei der organischen polaren Verbindung (a2) um eine Verbindung der Formel (6)
(R¹⁷O)(R¹⁸O)(R¹⁹O)P (6)
worin R¹⁷ bis R¹⁹ jeweils für eine Alkyl- oder Arylgruppe jeweils mit 1 bis 20 Kohlenstoffatom(en) stehen, handelt.

9. Verfahren nach Anspruch 7, wobei es sich bei der organischen polaren Verbindung (a2) um eine Verbindung der Formel (7)
(R¹⁷O)(R¹⁸O)(R¹⁹O)P=O (7)
worin R¹⁷ bis R¹⁹ jeweils für eine Alkyl- oder Arylgruppe mit jeweils 1 bis 20 Kohlenstoffatom(en) stehen, handelt.

## Revendications

1. Catalyseur de polymérisation d'oléfines comprenant :
(a) un produit d'addition de (a1) un composé oxyorganique de l'aluminium avec (a2) un composé polaire organique qui est au moins un composé choisi dans l'ensemble constitué par un composé phosphoré représenté par l'une des formules (4) et (5) suivantes et exempt d'hydrogène actif ; et
(b) un métallocène :
R¹⁴R¹⁵R¹⁶P (4)
R¹⁴R¹⁵R¹⁶P=Z (5)
dans lesquelles R¹⁴ à R¹⁶ représentent chacun un groupe alkyle, alcoxy, alkylthio, aryle, aryloxy, arylthio, dialkylamino ou acyle ayant de 1 à 20 atomes de carbone, avec pour condition qu'au moins l'un de R¹⁴ à R¹⁶ est un groupe alcoxy, un groupe alkylthio, un groupe aryloxy, un groupe arylthio, un groupe dialkylamino ou un groupe acyle ; et Z représente =O, =S, un groupe alkylidène ou un groupe imino.

2. Catalyseur de polymérisation d'oléfines selon la revendication 1, dans lequel ledit composé polaire organique (a2) est un composé représenté par la formule (6) :
(R¹⁷O)(R¹⁸O)(R¹⁹O)P (6)
dans laquelle R¹⁷ à R¹⁹ représentent chacun un groupe alkyle ou aryle ayant de 1 à 20 atomes de carbone.

3. Catalyseur de polymérisation d'oléfines selon la revendication 1, dans lequel ledit composé polaire organique (a2) est un composé représenté par la formule (7) :
(R¹⁷O)(R¹⁸O)(R¹⁹O)P=O (7)
dans laquelle R¹⁷ à R¹⁹ représentent chacun un groupe alkyle ou aryle ayant de 1 à 20 atomes de carbone.

4. Catalyseur de polymérisation d'oléfines selon la revendication 1, dans lequel ledit métallocène est au moins un métallocène d'un métal du groupe III, IV, V ou VI du Tableau Périodique.

5. Catalyseur de polymérisation d'oléfines selon la revendication 1, dans lequel ledit métallocène est au moins un métallocène choisi dans l'ensemble constitué par les composés de métal de transition représentés par les formules (1), (2) et (3) : 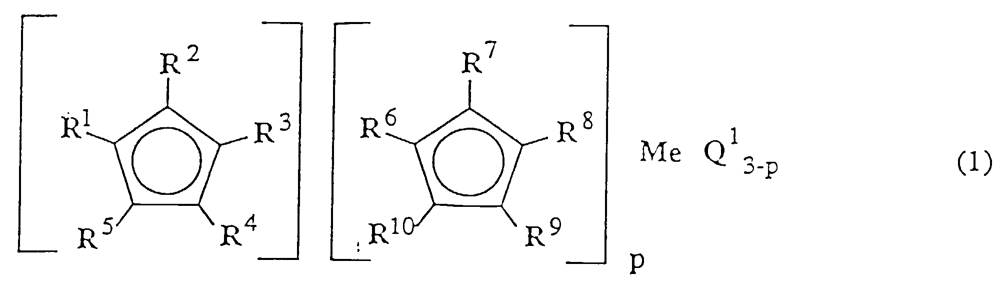 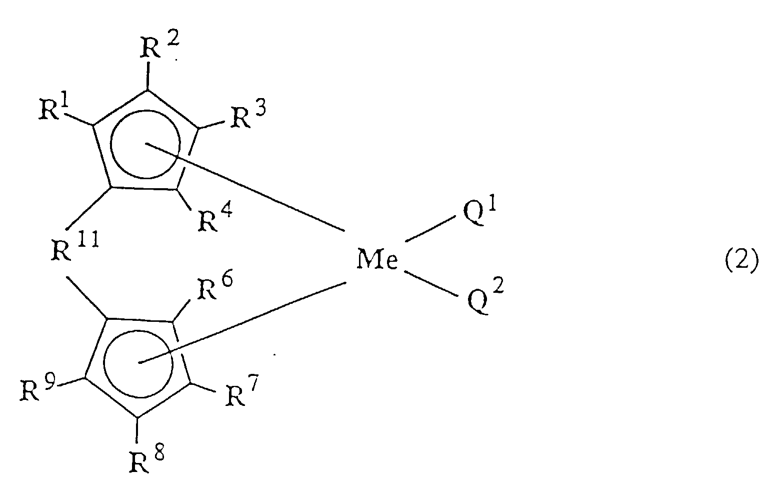 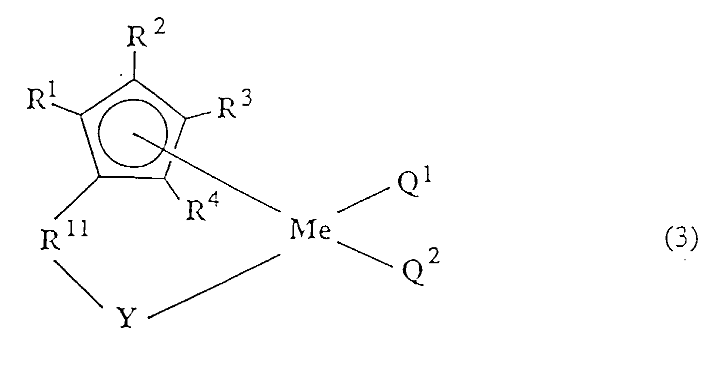 dans lesquelles R¹ à R¹⁰, qui peuvent être identiques ou différents, représentent chacun un atome d'hydrogène, un groupe hydrocarboné, un groupe alkylsilyle, un groupe alkylgermyle ou un cycle à 4 à 6 chaînons ayant une liaison carbone-carbone ; R¹¹ représente un groupe alkylène, alkylgermylène ou alkylsilylène ayant de 1 à 20 atomes de carbone ; les radicaux Q, qui peuvent être identiques ou différents, représentent chacun un groupe hydrocarboné, un groupe alcoxy, un groupe aryloxy, un groupe siloxy, un atome d'hydrogène ou un atome d'halogène ; Y représente -O-, -S-, -NR¹²-, -PR¹²- ou un ligand donneur d'électrons choisi dans l'ensemble constitué par -OR¹², -SR¹², -NR¹²R¹³ et -PR¹²R¹³, où R¹² et R¹³ représentent chacun un atome d'hydrogène, un groupe hydrocarboné, un groupe halogénoalkyle ou un groupe aryle ; Me représente un métal de transition du Groupe III, IV, V ou VI du Tableau Périodique ; et p représente un entier valant 0 ou 1.

6. Catalyseur de polymérisation d'oléfines selon la revendication 1, dans lequel ledit produit d'addition (a) a une extraction à l'hexane non supérieure à 20 %, une extraction au toluène non inférieure à 15 %, une extraction à l'heptane non supérieure à 25 % et une extraction au benzène supérieure à 10 % et non supérieure à 30 %.

7. Procédé pour préparer une polyoléfine, comprenant les étapes de polymérisation ou de copolymérisation d'une oléfine en présence d'un catalyseur de polymérisation d'oléfines, ledit catalyseur de polymérisation d'oléfines comprenant :
(a) un produit d'addition de (a1) un composé oxyorganique de l'aluminium avec (a2) un composé polaire organique qui est au moins un composé choisi dans l'ensemble constitué par un composé phosphoré représenté par l'une des formules (4) et (5) suivantes et exempt d'hydrogène actif ; et
(b) un métallocène :
R¹⁴R¹⁵R¹⁶P (4)
R¹⁴R¹⁵R¹⁶P=Z (5)
dans lesquelles R¹⁴ à R¹⁶ représentent chacun un groupe alkyle, alcoxy, alkylthio, aryle, aryloxy, arylthio, dialkylamino ou acyle ayant de 1 à 20 atomes de carbone, avec pour condition qu'au moins l'un de R¹⁴ à R¹⁶ est un groupe alcoxy, un groupe alkylthio, un groupe aryloxy, un groupe arylthio, un groupe dialkylamino ou un groupe acyle ; et Z représente =O, =S, un groupe alkylidène ou un groupe imino.

8. Procédé selon la revendication 7, dans lequel ledit composé polaire organique (a2) est un composé représenté par la formule (6) :
(R¹⁷O)(R¹⁸O)(R¹⁹O) P (6)
dans laquelle R¹⁷ à R¹⁹ représentent chacun un groupe alkyle ou aryle ayant de 1 à 20 atomes de carbone.

9. Procédé selon la revendication 7, dans lequel ledit composé polaire organique (a2) est un composé représenté par la formule (7):
(R¹⁷O)(R¹⁸O)(R¹⁹O)P=O (7)
dans laquelle R¹⁷ à R¹⁹ représentent chacun un groupe alkyle ou aryle ayant de 1 à 20 atomes de carbone.
